# EUROPEAN PATENT APPLICATION

(11) **EP 1 555 003 A1**
(43) Date of publication of application: **20.07.2005**
(21) Application number: 04030737.3
(22) Date of filing: 23.12.2004
(51) Int. Cl.: A61H 1/00

(54) **Chair-type massaging machine**

(30) Priority: 14.01.2004 JP 2004007111
(71) Applicant: Omron Healthcare Co., Ltd., Kyoto 615-0084 (JP)
(72) Inventor: Miki, Akitoshi Omron Healthcare Co.,Ltd., Kyoto-shi Kyoto 615-0084 (JP); Asai, Rika Omron Healthcare Co.,Ltd., Kyoto-shi Kyoto 615-0084 (JP)
(74) Representative: Kilian, Helmut, Dr.

(57) **Abstract**

The chair-type massaging machine (100,200,300,400) comprises a seat part (111) on which a user is seated; a rotational axis (138), extended out forward from the front end of the seat part; and a lower-leg massage part (120) which has first surfaces (121) and (122) in concavo-convex form including concave parts (121,122,221,222,321,322,421,422) and convex parts, and a second surface (125) in almost flat form, and in which the first surfaces (121) and (122) and the second surface (125) are engaged with each other invertibly around the rotational axis (138).

## Description

### BACKGROUND OF THE INVENTION

### Technical Field

The present invention relates to a Chair-type massaging machine having a lower-leg massage function.

### Related Prior Art

There have hitherto been Chair-type massaging machines having a so-called lower-leg massage function, which applies massage to a user's lower-legs while the user remains seated (e.g. Japanese Patent Laid-Open No. Hei 8-257084).

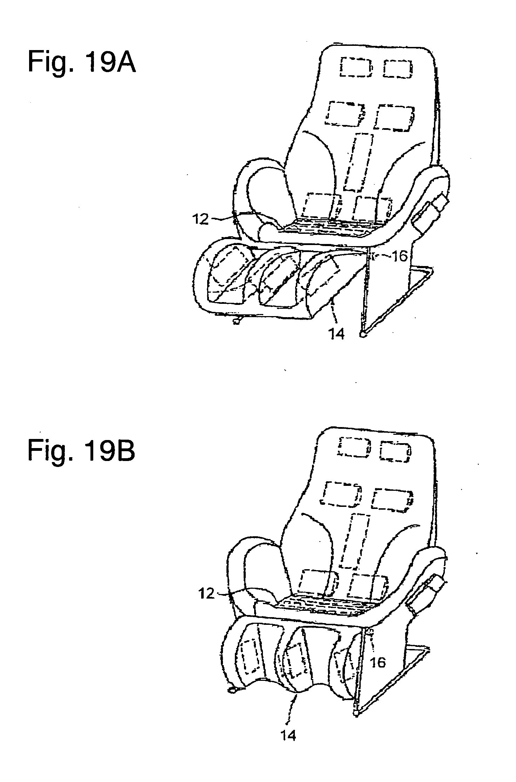

Fig. 19 shows an external view of a first conventional massage chair. As shown in Figs. 19A and 19B, the massage chair is equipped with a lower-leg supporting part 14 in concavo-convex form having a massage function, rotatably around a pivot 16 as a Rotational axis, being mounted on the front end of a seat part 12. When massage is to be applied to the user, the lower-leg supporting part 14 is forwardly rotated and the user then places his or her lower-legs on the concave parts of the lower-leg supporting part 14, as shown in Fig. 19A. On the other hand, when massage is not to be applied to the user, the lower-leg supporting part 14 is rotated downward, as shown in Fig. 19B.

It is sometimes the case that the user considers his or her lower-legs need some kind of support so as to be comfortably seated on the massage chair even when massage is not applied. In such a case, although massage is not applied, the lower-leg supporting part 14 is rotated to the front of the seat part 12, as shown in Fig. 19A. The user then places his or her lower-legs in the concave parts of the lower-leg supporting part 14, which may, however, cause the user to have a strong feeling of restraint due to the difficulty in freely moving the lower-legs.

As one example for solving this problem with the conventional massage chair having the lower-leg massage function, there have been provided chair-type massaging machines in which the rear surface of the lower-leg supporting part for supporting lower-legs has been formed flat, and when the lower-leg massage function is not in use, the lower-leg supporting part can be inverted in a forward/backward direction around a horizontal axis 26 as a primary axis (e.g. Japanese Patent Laid-Open No. 2003-62024).

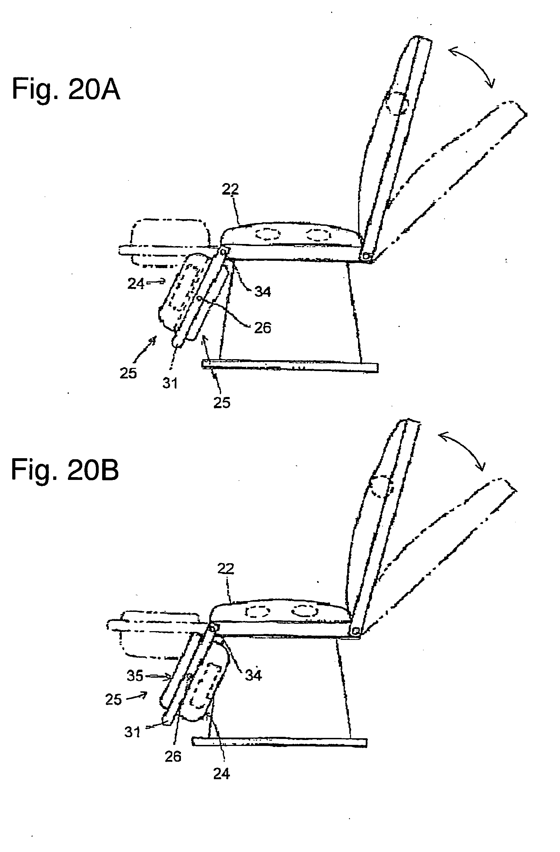

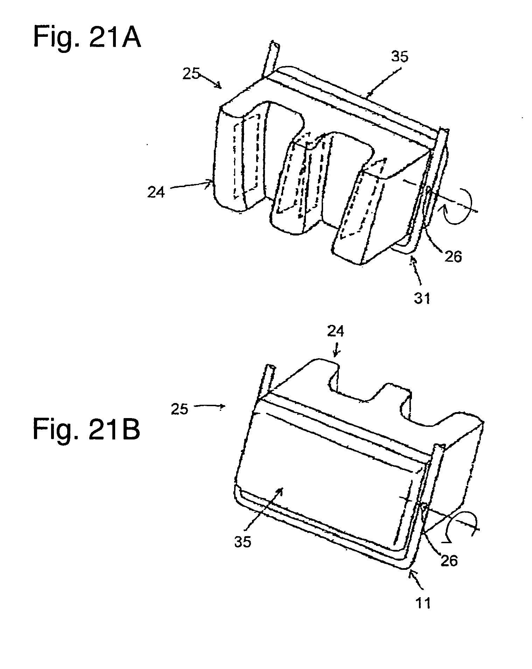

Fig. 20 is one example of the chair-type massaging machine as thus described; A shows a state where the lower-leg massage function is usable, and B shows a case where the lower-leg massage function is not in use. Further, Fig. 21 is one example of the switching of a footrest 25 for supporting lower-legs; A shows a state where a massaging surface 24 for applying massage to lower-legs is usable, and B shows a state where a flat foot placing surface 35 is usable when lower-leg massage is not applied.

### DISCLOSURE OF THE INVENTION

However, in the foregoing conventional chair-type massaging machine having the lower-leg massage function, since the provided footrest 25 is invertible in the forward/backward direction against the horizontal primary axis 26, it has been necessary to form a frame outside the footrest 25 for supporting the rotational axis. Therefore, the conventional chair-type massaging machine having the lower-leg massage function has a problem of the increased total weight thereof. Further, in this chair-type massaging machine, the mobile part of the footrest 25 and the frame supporting the footrest 25 are exposed to the outside, thus creating the possibility that the user's toe could be caught between the lower-leg massager part and the frame. Moreover, in this chair-type massaging machine, the shape of the lower-leg massager part is not accommodated with good appearance in the overall shape of the chair-type massaging machine, thereby setting a limit on the design of the chair-type massaging machine.

The present invention was made in light of the above actual situations, and has an object to provide a technique to be used in a massaging machine having a lower-leg massage function, for simplifying components of the lower-leg massage function while improving the user's comfort when the lower-leg massage function is not in use.

The present invention was configured as follows in order to achieve the above object.

Namely, the present invention can be specified as a chair-type massaging machine comprising: a seat part on which a user is seated; a rotational axis, extended out forward from said front end of said seat part; and a lower-leg massage part which has first surfaces in concavo-convex form including concave parts and convex parts, and a second surface in almost flat form, and in which the first surfaces and the second surface are engaged with each other invertibly around the rotational axis.

In the present invention, the Lower-leg massage part rotates around the rotational axis extended out forward from the front end of the seat part, in the switching between the first surfaces for applying lower-leg massage and the second surface formed in almost flat for supporting lower-legs.

Therefore, according to the present invention, it is possible to provide a technique to be used in a massaging machine having a lower-leg massage function, for simplifying components of the lower-leg massage function while improving the user's comfort when the lower-leg massage function is not in use.

Further, in the present invention, the first surfaces and the second surface may be formed on the rear surface sides of each other.

The present invention can also be specified as a chair-type massaging machine comprising: a seat part on which a user is seated; a pair of rotational axes, each extended out forward from the front end of said seat part; and a pair of lower-leg massage parts, each of which has a first surface in concavo-convex form including a concave part and convex parts, and a second surface in almost flat form, and in which the first surface and the second surface are engaged with each other rotatably around said rotational axis.

In the present invention, the lower-leg massage parts, each formed to enable switching between the first surface for applying lower-leg massage and the second surface formed in almost flat for supporting lower-legs, were provided so as to respectively accommodate a pair of lower-legs. Further, in the present invention, the pair of lower-leg massage parts was rotated by respectively corresponding axes. With this configuration, the lower-leg massage parts rotate with a small rotation radius in the present invention.

Therefore, according to the present invention, it is possible to provide a massaging machine having a lower-leg massage function with a compact and simplified configuration that is formed in consideration of the state where the lower-leg massage function is not in use.

Further, in the present invention, said concave part may be formed of a bottom wall for supporting a lower-leg, and a pair of sidewalls erected on both sides of said bottom wall along a lower-leg to be messaged, to constitute the convex part, said rotational axis may be positioned close to the outside surface of said bottom wall in the central vertical section of the bottom wall, and said first surfaces and the second surface may be formed on the rear surface sides of each other.

Further, in the present invention, said concave part may be formed of a bottom wall for supporting a lower-leg, and an outside wall in contact with said lower-leg from the outside and an inside wall in contact with said lower-leg from the inside, which are erected on each side of said bottom wall along the lower-leg to be messaged, to constitute said convex part, said rotational axis may be positioned in the vicinity of a ridge constructed of the rear surface of said bottom wall and the rear surface of said outside wall, said inside wall is formed lower than said outside wall, and said second surface may be formed on the outside of said outside wall.

Further, in the present invention, said concave part may be formed of a bottom wall for supporting a lower-leg, and an outer sidewall in contact with said lower-leg from the outside and an inner sidewall in contact with said lower-leg from the inside, which are erected on each side of said bottom wall along the lower-leg to be messaged, to constitute said convex part, and said rotational axis may be positioned in the vicinity of a ridge constructed of the rear surface of said bottom wall and the rear surface of said inner sidewall.

According to the present invention thus described, it is possible to provide a technique to be used in a massaging machine having a lower-leg massage function, for simplifying components of the lower-leg massage function while improving the user's comfort when the lower-leg massage function is not in use.

### BRIEF DESCRIPTION OF THE DRAWINGS

Fig. 1 shows a view of a chair-type massaging machine having a lower-leg massage function according to Embodiment 1 of the present invention, showing a state where a lower-leg massage part is usable.
Fig. 2 shows a view of the chair-type massaging machine having the lower-leg massage function according to Embodiment 1 of the present invention, showing a state where the lower-leg massage part is not in use.
Fig. 3 shows a view of a chair-type massaging machine having a lower-leg massage function according to Embodiment 2 of the present invention, showing a state where lower-leg massage parts are usable.
Fig. 4 shows a view of the chair-type massaging machine having the lower-leg massage function according to Embodiment 2 of the present invention, showing a state where the lower-leg massage parts are not in use.
Fig. 5 shows a view of a chair-type massaging machine having a lower-leg massage function according to Embodiment 3 of the present invention, showing a state where lower-leg massage parts are usable.
Fig. 6 shows a view of the chair-type massaging machine having the lower-leg massage function according to Embodiment 3 of the present invention, showing a state where the lower-leg massage parts are not in use.
Fig. 7 shows a front view of the lower-leg massage parts in the chair-type massaging machine according to Embodiment 3, showing the state where the lower-leg massage parts are usable.
Fig. 8 shows a front view of the lower-leg massage parts in the chair-type massaging machine according to Embodiment 3, showing the state where the Lower-leg massage parts are not in use.
Fig. 9 shows a view of a chair-type massaging machine having a lower-leg massage function according to Embodiment 4 of the present invention, showing a state where lower-leg massage parts are usable.
Fig. 10 shows a view of the chair-type massaging machine having the lower-leg massage function according to Embodiment 4 of the present invention, showing a state where the lower-leg massage parts are not in use.
Fig. 11 shows a front view of the lower-leg massage parts in the chair-type massaging machine according to Embodiment 4, showing the state where the lower-leg massage parts are usable.
Fig. 12 shows a front view of the lower-leg massage parts in the chair-type massaging machine according to Embodiment 4, showing the state where the lower-leg massage parts are not in use.
Fig. 13 shows view showing one example of the case where the lower-leg massage parts rotate with a pneumatic tube in the chair-type massaging machine having a lower-leg massage function according to Embodiment 3.
Fig. 14 shows a view showing a state where the concave parts have been turned upward by the pneumatic tube in the chair-type massaging machine.
Fig. 15 shows a view showing a state where foot placing parts have been turned upward by the pneumatic tube in the chair-type massaging machine.
Fig. 16 shows view showing one example of the case where the lower-leg massage parts are rotated by a pneumatic tube in the chair-type massaging machine having the lower-leg massage function according to Embodiment 4.
Fig. 17 shows a view showing a state where the concave parts have been turned upward by the pneumatic tube in the chair-type massaging machine.
Fig. 18 shows a view showing a state where foot placing parts have been turned upward by the pneumatic tube in the chair-type massaging machine.
Fig. 19 shows a view showing one example of a conventional chair-type massaging machine having a lower-leg massage function.
Fig. 20 shows one example of a conventional chair-type massaging machine having a lower-leg massage function, with lower-leg supporting part made invertible.
Fig. 21 shows a view showing one example of the switching of a footrest 25 for supporting lower-legs.
Fig. 22 shows a view showing radii of rotations of the Lower-leg massage parts around the rotation centers T2 and T3 in the chair-type massaging machine.

### DESCRIPTION OF THE PREFERRED EMBODIMENTS

In the following, chair-type massaging machines having a lower-leg massage function according to preferred embodiments of the present invention are described with reference to the drawings.

### Embodiment 1

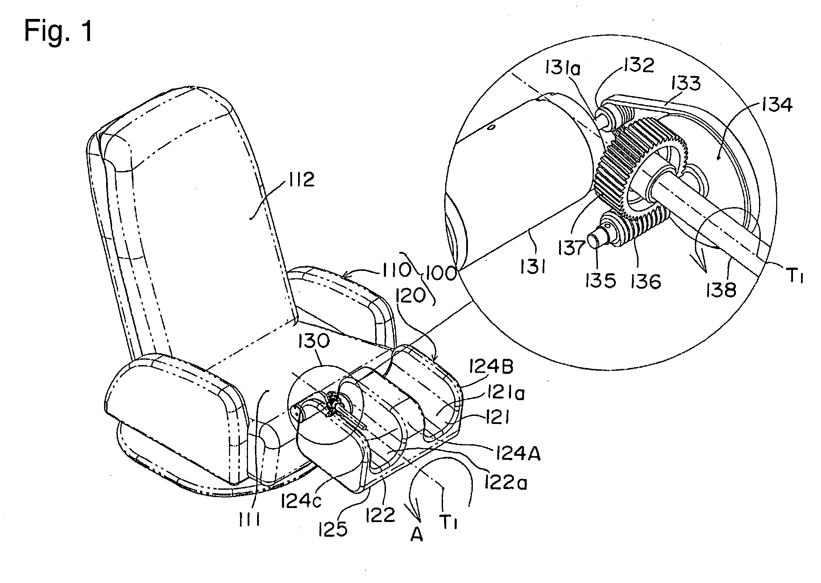

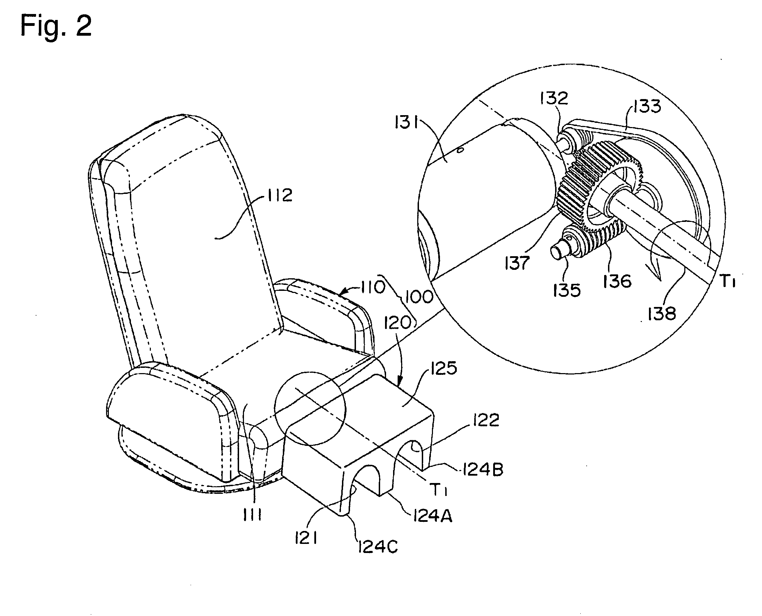

Figs. 1 and 2 are views of a chair-type massaging machine 100 having a lower-leg massage function according to Embodiment 1 of the present invention; Fig. 1 shows a state where a lower-leg massage part is usable, and Fig. 2 shows a state where the lower-leg massage part is not in use.

In Fig. 1, the chair-type massaging machine 100 according to Embodiment 1 has a chair body 110 provided with a seat part 111 on which a user is seated, and a backrest part 112 for supporting the user's upper-body when the user is seated. The chair-type massaging machine 100 further has a lower-leg massage part 120 that is provided with concave parts 121 and 122 and applies massage to lower-legs supported by those concave parts 121 and 122.

The lower-leg massage part 120 is mounted on the front end of the seat part 111. The lower-leg massage part 120 is engaged with the chair body 110 at the rotation center T1 provided at the approximate center of the cross section of the lower-leg massage part 120, by a rotational axis 138 extended out forward from the front end of the seat part 111. This rotational axis 138 serves for rotating the lower-leg massage part 120 around the rotation center T1.

In the lower-leg massage part 120, the concave parts 121 and 122 are formed of a center wall 124A, positioned in the approximate middle in the cross section of the lower-leg massage part 120, and sidewalls 124B and 124C which are both sides of the lower-leg massage part 120. In Fig. 1, the upward-facing top of each of the center wall 124A and the sidewalls 124B and 124C is formed almost flat. Further, the bottom walls 121a and 122a of the concave parts 121 and 122 are held wide enough to accommodate the lower-legs (e.g. the lower part than the knee) of the user.

In the lower-leg massage part 120, the insides of the bottom walls 121a and 122a, the center wall 124A, and the inside of the sidewalls 124B and 124C are provided, as appropriate, with massage means (can be considered as a pneumatic or mechanical pressing means, for example), not shown in the figure, for applying massage to the lower-legs accommodated in the concave parts 121 and 122. As shown in Fig. 1, when the concave parts 121 and 122 are facing upward (the position where the concave parts 121 and 122 are in a state of being capable of accommodating the lower-legs of the user seated on the seat part 111), massage can be applied to the user's lower-legs by the massage means. It is to be noted that in the chair-type massaging machine 100 having the lower-leg massage function, the surfaces provided with the concave parts 121 and 122 correspond to the first surfaces of the present invention.

A drive 130 for rotating the lower-leg massage part 120 comprises a motor 131, a drive pulley 132, a drive belt 133, a driven pulley 134, a worm shaft 135, a worm 136, a worm wheel 137 and the rotational axis 138.

In the drive 130, the drive pulley 132 is attached to the top of an output shaft 131a of the motor 131. With the drive belt 133 running between the drive pulley 132 and the driven pulley 134, the power of the motor 131 is transmitted from the drive pulley 132 to the driven pulley 134. The worm 136 is mounted on the worm shaft 135 with the driven pulley 134 attached thereto. This worm 136 transmits the power of the motor 131 to the worm wheel 137 in engagement with the worm 136. The rotational axis 138 for rotating the lower-leg massage part 120 is incorporated into the worm wheel 137. By rotation of the rotational axis 138, the lower-leg massage part 120 is rotated around the rotation center T1, for example in the direction of the arrow A.

The lower-leg massage part 120 is rotated by the drive 130 around the rotation center T1, for example in the direction of the arrow A. With this rotational movement, a foot placing part 125 of the lower-leg massage part 120, formed in almost flat, faces upward (the position where the user, seated on the seat part 111, can place his or her lower-legs). Namely, in the lower-leg massage part 120, the foot placing part 125 and the first surfaces including the concave parts 121 and 122 are provided on the rear surface sides of each other. It should be noted that in the chair-type massaging machine 100 according to the present embodiment, the surface provided with the foot placing part 125 corresponds to the second surface of the present invention.

Since the foot placing part 125 is facing upward, the user can have his or her lower-legs comfortably supported thereon without a feeling of restraint even when the lower-leg massage part 120 applies no massage to the lower-legs.

As thus described, the chair-type massaging machine 100 having the lower-leg massage function according to Embodiment 1 includes the lower-leg massage part 120 that comprises the first surfaces having the massage means for applying massage to the user's lower-legs, and the second surface including the foot placing part 125 in almost flat form capable of supporting the user's lower-legs when no massage is applied to the user's lower-legs. Further, the chair-type massaging machine 100 is formed such that the first surfaces are placed on the opposite side of the second surface (the first surfaces and the second surface are formed on the rear surface sides of each other). Moreover, in the chair-type massaging machine 100, the rotational axis 138, extended out forward from the front end of the seat part 111 of the chair body 110, supports the lower-leg massage part 120. That is, the chair body 110 is equipped with the lower-leg massage part 120 by the rotational axis 138. In the chair-type massaging machine 100, the lower-leg massage part 120 rotates around the rotational axis 138 as the rotation center T1, to switch between the above first surfaces and second surface.

Therefore, according to the chair-type massaging machine having the lower-leg massage function of Embodiment 1, it is possible to provide, with the simplified configuration, the function of comfortably supporting the user's lower-legs while the user has no feeling of restraint when the lower-leg massage function is not in use.

### Embodiment 2

Next, a chair-type massaging machine having a lower-leg massage function according to Embodiment 2 is described with reference to the drawings. It is to be noted that, when the same component as that used in Embodiment 1 is present in Embodiment 2, the common numeral for that component is used and explanation of the component is not described.

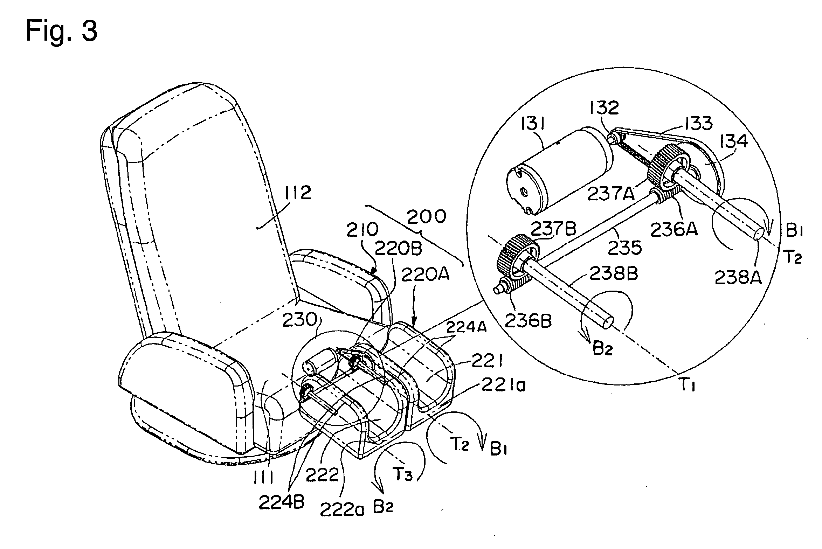

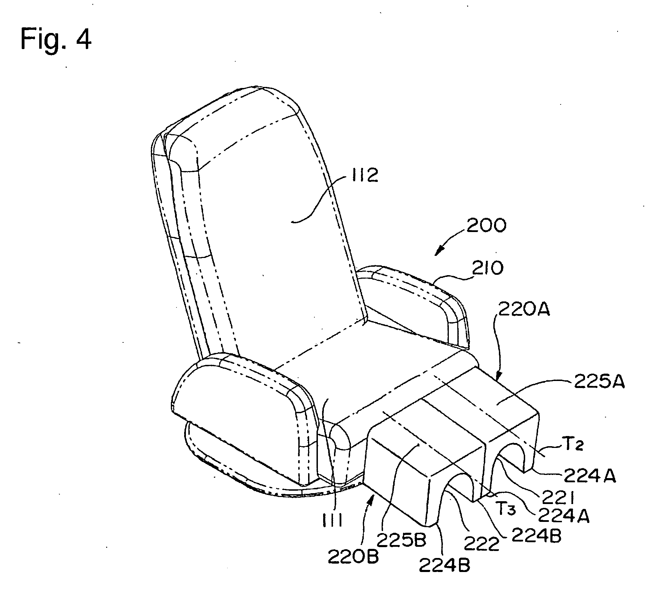

Figs. 3 and 4 are views of a chair-type massaging machine 200 having a lower-leg massage function according to Embodiment 2; Fig. 3 shows a state where lower-leg massage parts are usable, and Fig. 4 shows a state where the lower-leg massage parts are not in use.

On the basis of Fig. 3, the chair-type massaging machine 200 is described. In the chair-type massaging machine 200, lower-leg massage parts 220A and 220B are formed so as to be capable of respectively accommodating each one of the user's lower-legs. Namely, the lower-leg massage parts 220A and 220B respectively have the concave parts 221 and 222, each being capable of accommodating each one of the user's pair lower-legs.

In the lower-leg massage parts 220A and 220B, bottom walls 221a and 222a are held wide enough to respectively accommodate the user's pair of lower-legs (e.g. the part from around the thigh to around the knee), and the concave parts 221 and 222, including on both sides thereof a pair of Sidewalls 224A and 224B with almost flat tops, are formed on the upper surface side in Fig. 3. As in the case of the chair-type massaging machine 100, massage means for applying massage to the lower-legs accommodated in the concave parts 221 and 222, which is not shown in the figure, is provided, as appropriate, on the sidewalls 224A and 224B, and the insides of the bottom walls 221a and 222a in the concave parts 221 and 222. As shown in Fig. 3, when the concave parts 221 and 222 are facing upward, massage can be applied to the user's lower-legs by the massage means.

In the lower-leg massage parts 220A and 220B, rotation centers T2 and T3 are provided between the middle part of the bottom walls 221a and 222a on the bottoms of the lower-leg massage parts 220A and 220B, and foot placing parts 225A and 225B positioned on the rear surfaces of the bottom walls 221a and 222a. At the rotation centers T2 and T3, the lower-leg massage parts 220A and 220B are engaged with the chair body 110 by a pair of rotational axes 238A and 238B, which are extended out forward from the front end of the seat part 111. The rotational axes 238A and 238B serve for rotating the lower-leg massage parts 220A and 220B around the rotation centers T2 and T3. Since the two lower-leg massage parts 220A and 220B are rotated by the two rotational axes 238A and 238B, the rotation radius of each of those lower-leg massage parts in the chair-type massaging machine 200 is small as compared to that of the lower-leg massage part 120 in the chair-type massaging machine 100.

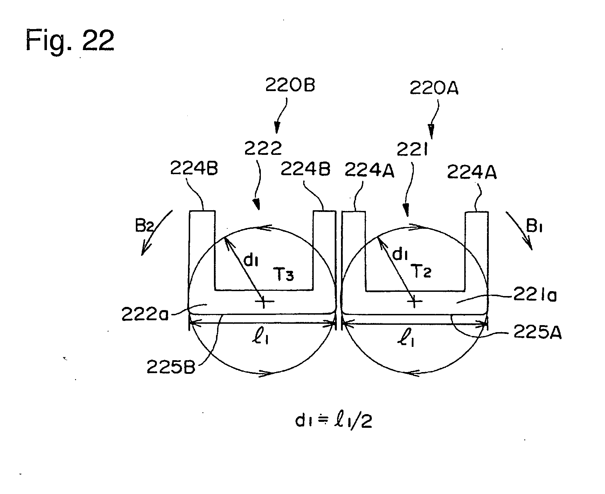

Fig. 22 is a view showing radii of rotations of the lower-leg massage parts 220A and 220B around the rotation centers T2 and T3 in the chair-type massaging machine 200. In the cross section between the bottom walls 221a and 222a, and the foot placing parts 225A and 225B, desirably, the rotation centers T2 and T3 are positioned horizontally in the middle part, and also positioned longitudinally close to the foot placing parts 225A and 225B on the outside surfaces of the lower-leg massage parts 220A and 220B (in Fig. 22, slightly downward from the center of the cross section). With this positioning, a rotation radius d1 of each of the lower-leg massage parts 220A and 220B is half of the width 11 of each of the bottom walls 221a and 222a. The rotation centers T2 and T3 have been provided in the foregoing position in order to reduce elastic deformation which occurs in the rotation due to the contact between the pair of lower-leg massage parts 220A and 220B. The lower-leg massage parts 220A and 220B rotate in the directions of the arrows B1 and B2 (the Lower-leg massage parts 220A and 220B both rotate outwardly) around the rotation centers T2 and T3, to switch from a state where the concave parts 221 and 222 (first surfaces) are facing upward to a state where the foot placing parts 225A and 225B (second surfaces) are facing upward. The mutual outward rotation thus described permits the inner sidewalls 224A and 224B of the lower-leg massage parts 220A and 220B to rotate in the direction separating from each other, without coming into contact with each other. Since the foot placing parts 225A and 225B are facing upward, the user can have his or her legs comfortably supported thereon without a feeling of restraint when the lower-leg massage parts 220A and 220B apply no massage to the lower-legs.

A drive 230 for rotating the lower-leg massage parts 220A and 220B comprises the motor 131, the drive pulley 132, the drive belt 133, the driven pulley 134, a worm shaft 235, worms 236A and 236B, worm wheels 237A and 237B and rotational axes 238A and 238B.

The difference between the drive 230 and the drive 130 according to Embodiment 1 lies in that, in place of one rotational axis 138 for rotating the lower-leg massage part 120, the rotational axes 238A and 238B are driven for rotating the lower-leg massage parts 220A and 220B which correspond to a pair of lower-legs. To realize this configuration, in the drive 230, the total length of the worm shaft 135 is extended to the total length of the worm shaft 235, which is provided with the worms 236A and 236B to be driven so as to rotate the pair of rotational axes 238A and 238B in mutually reverse directions.

As thus described, the chair-type massaging machine 200 having the lower-leg massage function according to Embodiment 2 includes the lower-leg massage parts 220A and 220B which are capable of respectively accommodating the user's pair of lower-legs. The lower-leg massage parts 220A and 220B comprise the first surfaces including the lower-leg massage parts 220A and 220B which are provided with the massage means for applying massage to the user's lower-legs, and the second surfaces including the foot placing parts 225A and 225B in almost flat form capable of supporting the user's lower-legs when no massage is applied to the user's lower-legs. Further, in the chair-type massaging machine 200, the two rotational axes 238A and 238B, extended out forward from the front end of the seat part 111 of the chair body 210, respectively support the lower-leg massage parts 220A and 220B. In the chair-type massaging machine 200, the lower-leg massage parts 220 A and 220B rotate around the rotational axes 238A and 238B as the rotation centers T2 and T3, to switch between the above first surfaces and second surfaces.

According to the chair-type massaging machine 200 having the lower-leg massage function of Embodiment 2, by making the simplified configuration more compact, it is possible to provide the function of comfortably supporting the user's lower-legs when the lower-leg massage function is not in use.

### Embodiment 3

Next, a chair-type massaging machine having a lower-leg massage function according to Embodiment 3 is described with reference to the drawings. It is to be noted that, when the same component as that used in Embodiment 1 or 2 is present in Embodiment 3, the common numeral for that component is used and explanation of the component is not described.

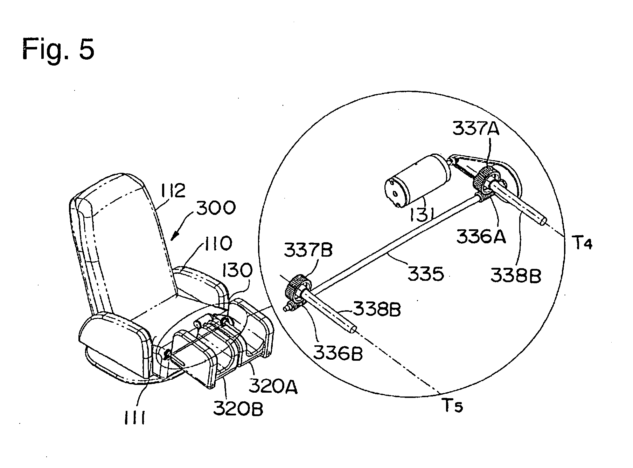

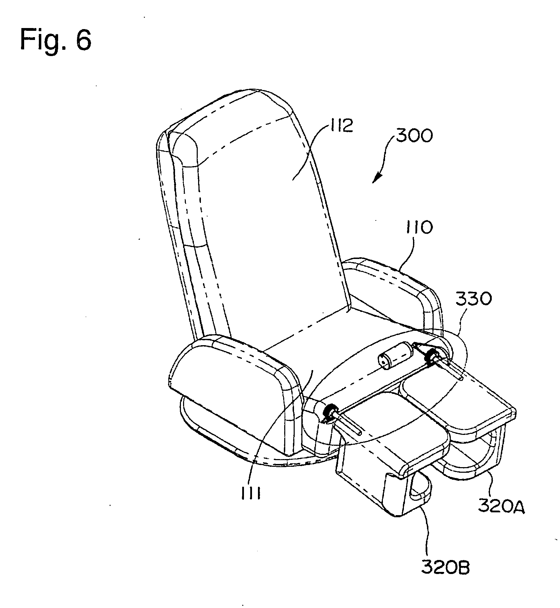

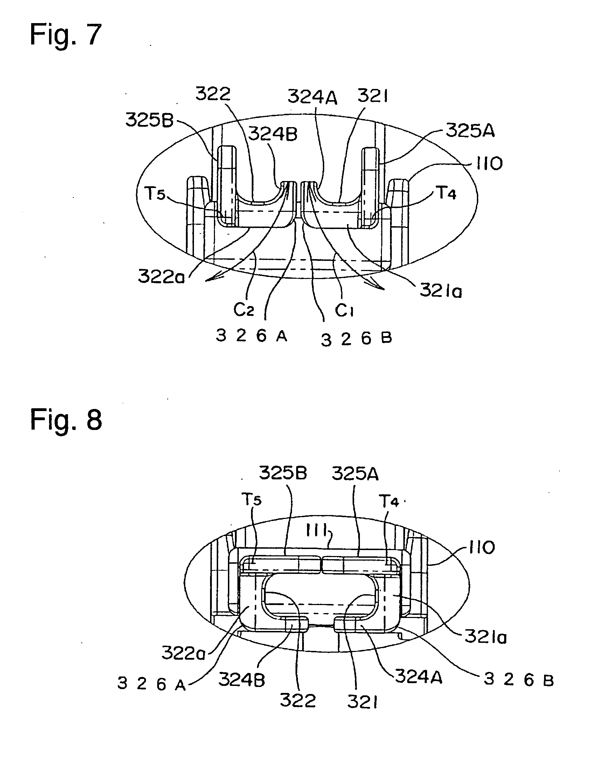

Figs. 5 and 6 are views of a chair-type massaging machine 300 having a lower-leg massage function according to Embodiment 3; Fig. 5 shows a state where lower-leg massage parts are usable, and Fig. 6 shows a state where the lower-leg massage parts are not in use. Further, Figs. 7 and 8 are front views of lower-leg massage parts 320A and 320B in the chair-type massaging machine 300 according to Embodiment 3; Fig. 7 shows a state where the lower-leg massage parts 320A and 320B are usable, and Fig. 8 shows a state where the lower-leg massage parts 320A and 320B are not in use.

On the basis of Fig. 7, the chair-type massaging machine 300 according to Embodiment 3 is described. In the chair-type massaging machine 300 according to Embodiment 3, lower-leg massage parts 320A and 320B are formed such that bottom walls 321a and 322a can respectively accommodate the user's pair of lower-legs. Namely, the lower-leg massage parts 320A and 320B respectively have the concave parts 321 and 322, which are formed of the bottom walls 321a and 322a wide enough to respectively accommodate the user's pair of lower-legs, inner sidewalls 324A and 324B erected on the bottom walls, and foot placing parts 325A and 325B.

On the basis of Figs. 7 and 8, the figurations of the lower-leg massage parts 320A and 320B are described. The lower-leg massage parts 320A and 320B have the inner sidewalls 324A and 324B as the inner sidewalls of the bottom walls 321a and 322a (inside the place of the user's lower-legs when accommodated). Further, the lower-leg massage parts 320A and 320B have outer sidewalls 326A and 326B of the bottom walls, and the outer surfaces thereof have the foot placing parts 325A and 325B formed in almost flat form. The foot placing parts 325A and 325B support the user's lower-legs when no lower-leg massage is applied. Referring to Fig. 7, in the lower-leg massage parts 320A and 320B, the heights of the sidewalls constituting the foot placing parts 325A and 325B (or the protruding lengths from the bottom walls 321a and 322a) are formed higher than the heights of the inner sidewalls 324A, 324B. With this configuration, the areas of the foot placing parts 325A and 325B can be wide when the second surfaces turn upward. Further, the inner sidewalls 324A and 324B are formed so as to avoid being deformed and coming contact with each other due to elasticity of the components in rotation, thereby preventing inhibition of the rotation. Hence, the foot placing parts 325A and 325B can readily support the user's lower-legs when they are placed thereon.

As in the case of the chair-type massaging machine 100, massage means for applying massage to the lower-legs accommodated in the concave parts 321 and 322, which is not shown in the figures, is provided, as appropriate, on the inner sidewalls 324A and 324B, the outer sidewalls 325A and 325B, and the insides of the bottom walls 321a and 322a in the concave parts 321 and 322. As shown in Fig. 5, when the concave parts 321 and 322 are facing upward, massage can be applied to the user's lower-legs by the massage means.

At the rotation centers T4 and T5 which are provided in the vicinities of ridge lines constructed of the ends of the foot placing parts 325A and 325B and the ends of the outside walls of the bottom walls 321a and 322a in the concave parts 321 and 322, the lower-leg massage parts 320A and 320B are engaged with the chair body 110 by a pair of rotational axes 338A and 338B, which are extended out forward from the front end of the seat part 111. In the chair-type massaging machine 300, by the power of the drive 330, the two rotational axes 338A and 338B of the pair of lower-leg massage parts 320A and 320B are rotated, for example, about 90 degrees in the directions of the arrows C1 and C2 from the state shown in Fig. 7. The difference between the drive 330 for rotating the rotational axes 338A and 338B, and the drive 230, lies in the mounting positions of the rotational axes 338A and 338B, as indicated in Fig. 5. Because of this difference, in the lower-leg massage parts in the chair-type massaging machine 300 according to Embodiment 3, the lower-leg massage parts 320A and 320B can be rotated with a small rotation radius as compared with the lower-leg massage part 120 in the chair-type massaging machine 100 of Embodiment 1. Further, the switching is possible at a small rotation angle as compared with the case of Embodiment 2.

As thus described, the chair-type massaging machine 300 having the lower-leg massage function according to Embodiment 3 includes the lower-leg massage parts 320A and 320B which are capable of respectively accommodating the user's pair of lower-legs, and comprise the first surfaces including the concave parts 320A and 320B which are provided with the massage means for applying massage to the user's lower-legs, and the second surfaces including the foot placing parts 325A and 325B capable of supporting the user's lower-legs when no massage is applied to the user's lower-legs. Further, in the chair-type massaging machine 300, the two rotational axes 338A and 338B, extended out forward from the front end of the seat part 111 of the chair body 110, respectively support the lower-leg massage parts 320A and 320B in the vicinities of the ridge lines between the ends of the outer sidewalls and the ends of the outside walls of the bottoms in the concave parts. In the chair-type massaging machine 100, the lower-leg massage parts 320A and 320B rotate around the rotational axes 138 and 338 as the rotation centers, to switch between the above first surfaces and second surfaces.

According to the chair-type massaging machine having the lower-leg massage function of Embodiment 3, by making the simplified configuration more compact, it is possible to provide the function of comfortably supporting the user's lower-legs when the lower-leg massage function is not in use.

### Embodiment 4

Next, a chair-type massaging machine having a lower-leg massage function according to Embodiment 4 of the present invention is described with reference to the drawings. It is to be noted that, when the same component as that used in Embodiment 1, 2 or 3 is present in Embodiment 4, the common numeral for that component is used and explanation of the component is not described.

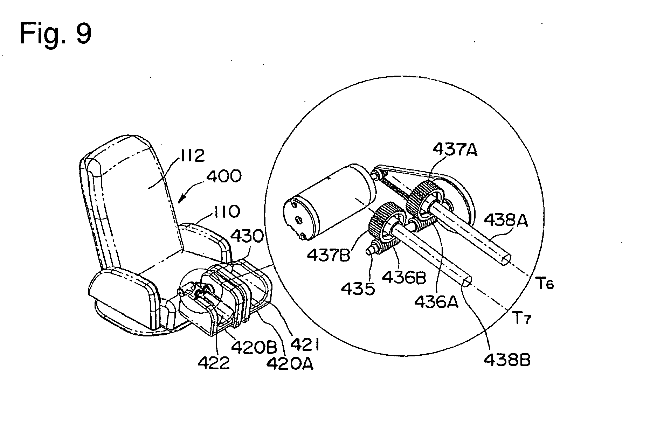

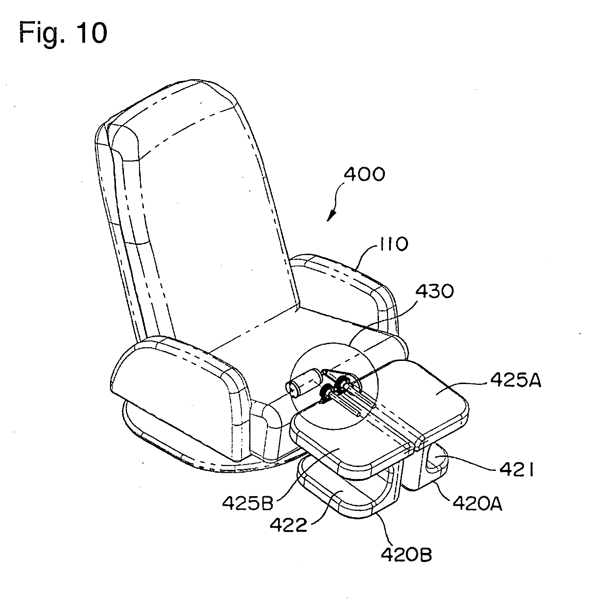

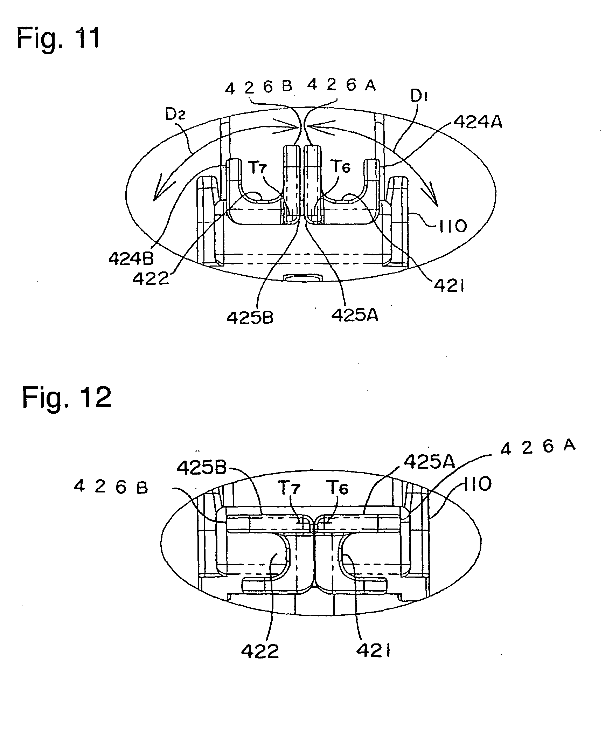

Figs. 9 and 10 are views of a chair-type massaging machine 400 having a lower-leg massage function according to Embodiment 4; Fig. 9 shows a state where lower-leg massage parts are usable, and Fig. 10 shows a state where the lower-leg massage parts are not in use. Further, Figs. 11 and 12 are front views of lower-leg massage parts 420A and 420B in the chair-type massaging machine 400 according to Embodiment 4; Fig. 11 shows a state where the lower-leg massage parts 420A and 420B are usable, and Fig. 12 shows a state where the lower-leg massage parts 420A and 420B are not in use.

On the basis of Fig. 11, the chair-type massaging machine 400 according to Embodiment 4 is described. In the chair-type massaging machine 400 according to Embodiment 4, lower-leg massage parts 420A and 420B are formed such that bottom walls 421a and 422a can respectively accommodate the user's pair of lower-legs. Namely, the lower-leg massage parts 420A and 420B respectively have the concave parts 421 and 422, which are formed of the bottom walls 421a and 422a wide enough to respectively accommodate the user's pair of lower-legs, outer sidewalls 424A and 424B erected on the Bottom walls, and foot placing parts 425A and 425B.

On the basis of Figs. 11 and 12, the figurations of the lower-leg massage parts 420A and 420B are described. The lower-leg massage parts 420A and 420B have the outer sidewalls 424A and 424B as the outer sidewalls of the bottom walls 421a and 422a (outside the place of the user's lower-legs when accommodated). Further, the lower-leg massage parts 420A and 420B have inner sidewalls 426A and 426B of the bottom walls, and the outer surfaces thereof have the foot placing parts 425A and 425B formed in almost flat form. The lower-leg massage parts 420A and 420B support the user's lower-legs when no lower-leg massage is applied. Referring to Fig. 11, in the lower-leg massage parts 420A and 420B, the heights of the foot placing parts 425A and 425B (or the protruding lengths from the bottom walls 421a and 422a) are formed higher than the heights of the outer sidewalls 424A and 424B. With this configuration, the areas of the foot placing parts 425A and 425B can be wide when the second surfaces turn upward. Hence, the foot placing parts 425A and 425B can readily support the user's lower-legs when they are placed thereon.

As in the case of the chair-type massaging machine 100, massage means for applying massage to the lower-legs accommodated in the concave parts 421 and 422, which is not shown in the figures, is provided, as appropriate, on the sidewalls 424A and 424B, the sidewalls 426A and 426B, and the insides of the bottom walls 421a and 422a in the concave parts 421 and 422. As shown in Fig. 9, when the concave parts 421 and 422 are facing upward, massage can be applied to the user's lower-legs by the massage means.

At the rotation centers T6 and T7 which are provided in the vicinities of the ridge lines constructed of the ends of the foot placing parts 425A and 425B and the ends of the outside walls of the bottoms 421a and 422a in the concave parts 421 and 422, the lower-leg massage parts 420A and 420B are engaged with the chair body 110 by a pair of rotational axes 438A and 438B, which are extended out forward from the front end of the seat part 111. In the chair-type massaging machine 400, by the power of the drive 430, the two rotational axes 438A and 438B of the pair of lower-leg massage parts 420A and 420B are rotated, for example, about 90 degrees in the directions of the arrows D1 and D2 from the state shown in Fig. 7. The difference between the drive 430 for rotating the rotational axes 438A and 438B, and the drive 230 lies in the mounting positions of the rotational axes 438A and 438B, as indicated in Fig. 5. Because of this difference, in the lower-leg massage parts in the chair-type massaging machine 400, the lower-leg massage parts 420A and 420B can be rotated with a small rotation radius as compared with the lower-leg massage part 120 in the chair-type massaging machine 100 of Embodiment 1. Further, the switching is possible at a smaller rotation angle than the case of Embodiment 2.

As thus described, the chair-type massaging machine 400 having the lower-leg massage function according to Embodiment 4 includes the lower-leg massage parts 420A and 420B which are capable of respectively accommodating the user's pair of lower-legs, and comprise the first surfaces including the concave parts 421 and 422 which are provided with the massage means for applying massage to the user's lower-legs, and the second surfaces including the foot placing parts 425A and 425B capable of supporting the user's lower-legs when no massage is applied to the user's lower-legs. Further, in the chair-type massaging machine 400, the two rotational axes 438A and 438B, extended out forward from the front end of the seat part 111 of the chair body 110, respectively support the lower-leg massage parts 420A and 420B in the vicinities of the ridge lines between the ends of the inner sidewalls and the ends of the outside walls of the bottoms in the concave parts. In the chair-type massaging machine 400, the lower-leg massage parts 420 A and 420B rotate around the rotational axes 438A and 438B as the rotation centers T6 and T7, to switch between the above first surfaces and second surface.

According to the chair-type massaging machine having the lower-leg massage function of Embodiment 4, by making the simplified configuration more compact, it is possible to provide the function of comfortably supporting the user's lower-legs when the lower-leg massage function is not in use.

It is to be noted that, in the examples of Figs. 11 and 12, the heights of the outer sidewalls 424A and 424B are configured lower than those of the inner sidewalls constituting the foot placing parts 425A and 425B. However, the heights of the inner sidewalls 424A and 424B may be configured higher than those of the inner sidewalls so long as the rotation is not inhibited.

### Other embodiments

The chair-type massaging machine of the present invention is not limited to the configurations represented in the above embodiments, and may for example be configured as follows.

For example, in the above embodiments, the lower-leg massage part in the chair-type massaging machine was rotated by the power from the drive installed in the seat 111 when rotated around the rotational axis. However, the chair-type massaging machine having a lower-leg massage function of the present invention is not limited to this configuration.

For example, instead of providing the power at the rotational axis of the chair-type massaging machine 100, air pressure may be applied and an elastic tube may then be used for rotating the lower-leg massage part, thereby enabling switching between the first surfaces and the second surfaces of the lower-leg massage part.

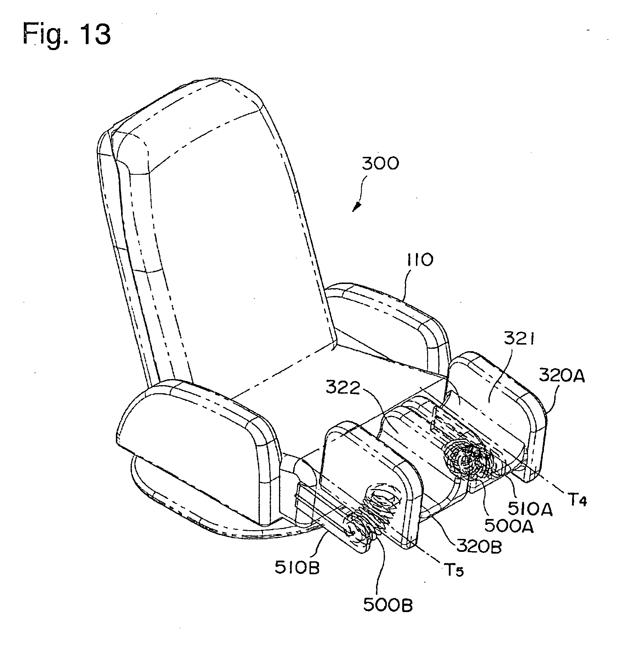

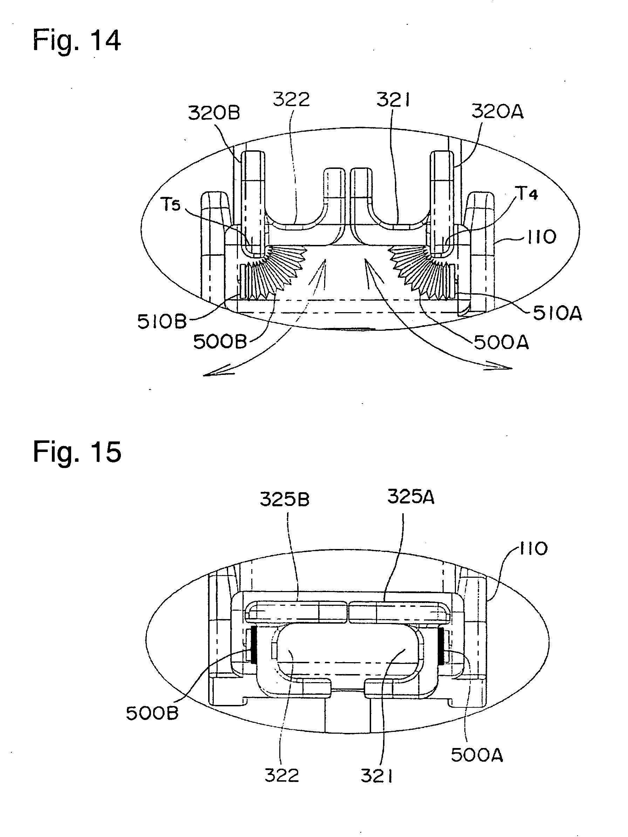

Fig. 13 shows one example of the case where the lower-leg massage parts 320A and 320B rotate with a pneumatic tube in the chair-type massaging machine 300 having a lower-leg massage function according to Embodiment 3. Further, Fig. 14 shows a state where the concave parts 321 and 322 have been turned upward by the pneumatic tube in the chair-type massaging machine 300. Moreover, Fig. 15 shows a state where foot placing parts 325A and 325B have been turned upward by the pneumatic tube in the chair-type massaging machine 300.

In Fig. 14, the lower-leg massage parts 320A and 320B are rotated by air tubes 500A and 500B provided on tube supporting parts 510A and 510B which are extended out forward from the front end of the chair part 111, so as to switch between the first surfaces and the second surface. Herein, the rotational axes 338A and 338B, provided in the rotation centers T4 and T5, rotatably engage the lower-leg massage parts 320A and 320B with the seat part 111. When air pressure is applied to the air tubes 500a and 500B in the state of Fig. 14, the lower-leg massage parts 320A and 320B rotate to become capable of supporting the lower-legs by the flat parts 325A and 325B as in the state of Fig. 15.

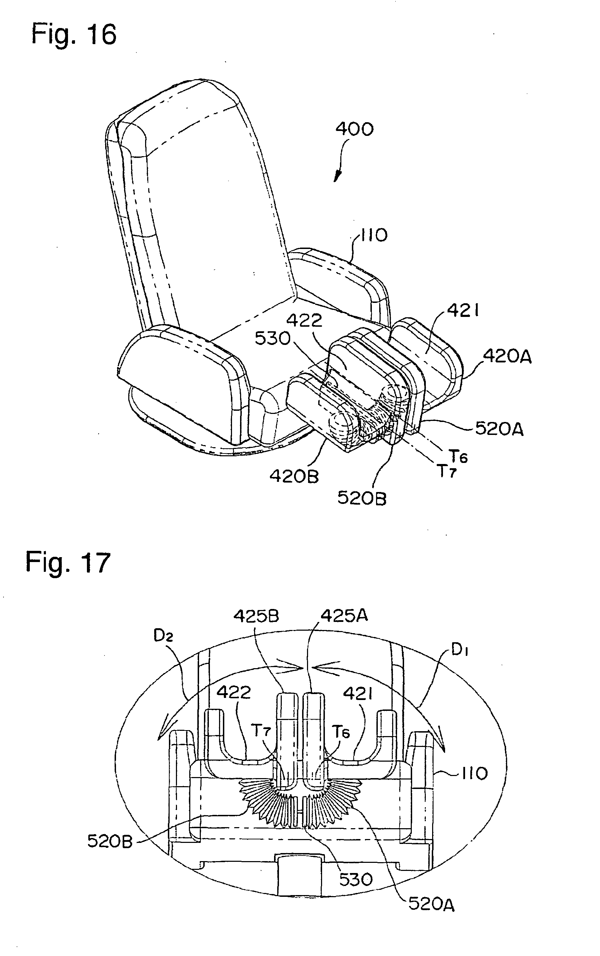

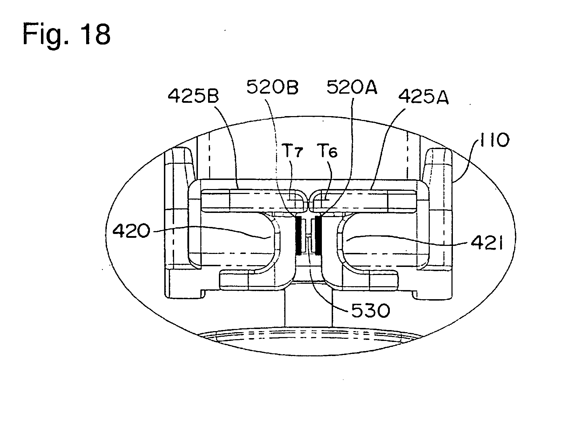

Fig. 16 shows one example of the case where the lower-leg massage parts 420A and 420B are rotated by a pneumatic tube in the chair-type massaging machine 400 having the lower-leg massage function according to Embodiment 4. Further, Fig. 17 shows a state where the concave parts 421 and 422 have been turned upward by the pneumatic tube in the chair-type massaging machine 400. Moreover, Fig. 18 shows a state where the foot placing parts 425A and 425B have been turned upward by the pneumatic tube in the chair-type massaging machine 400.

In Fig. 17, the lower-leg massage parts 420A and 420B are rotated by air tubes 520A and 530B provided on tube supporting part 530 which is extended out forward from the front end of the chair part 111, so as to switch between the first surfaces and the second surface. Herein, the rotational axes 438A and 438B, provided in the rotation centers T6 and T7, engage the lower-leg massage parts 420A and 420B rotatably with the seat part 111. When air pressure is applied to the air tubes 520a and 520B in the state of Fig. 17, the lower-leg massage parts 420A and 420B rotate to become capable of supporting the lower-legs by the flat parts 425A and 425B as in the state of Fig. 18.

### Industrial Applicability

The present invention is utilizable in industries providing chair-type massaging machines having a lower-leg massage function.

## Claims

1. A chair-type massaging machine (100,200,300,400), comprising:
a seat part (111) on which a user is seated;
a rotational axis (138,238,338,438), extended out forward from the front end of said seat part; and
a lower-leg massage part(120,220,320,420) which has first surfaces in concavo-convex form including concave parts (121,122,221,222,321,322,421,422) and convex parts, and a second surface in almost flat form, and in which said first surfaces and said second surface are engaged with each other invertibly around said rotational axis (138,238,338,438).

2. The chair-type massaging machine
(100,200,300,400) according to claim 1, wherein said first surfaces and said second surface are formed on the rear surface sides of each other.

3. A chair-type massaging machine (100,200,300,400), comprising:
a seat part (111) on which a user is seated;
a pair of rotational axes (138,238,338,438), each extended out forward from the front end of said seat part; and
a pair of lower-leg massage parts(120,220,320,420), each of which has a first surface in concavo-convex form including a concave part (121,122,221,222,321,322,421,422) and convex parts, and a second surface in almost flat form, and in which said first surfaces and said second surface are engaged with each other rotatably around said rotational axis (138,238,338,438).

4. The chair-type massaging machine (100,200,300,400) according to claim 3, wherein
said concave part (121,122,221,222,321,322,421,422) is formed of a bottom wall (121a,122a) for supporting a lower-leg, and a pair of sidewalls (124,224,324,424) erected on both sides of said bottom wall (121a,122a) along a lower-leg to be messaged, to constitute said convex part, and
said rotational axis (138,238,338,438) is positioned close to the outside surface of said bottom wall (121a,122a) in the central vertical section of said bottom wall (121a,122a), and said first surfaces and said second surface are formed on the rear surface sides of each other.

5. The chair-type massaging machine (100,200,300,400) according to claim 3, wherein
said concave part (121,122,221,222,321,322,421,422) is formed of a bottom wall (121a,122a) for supporting a lower-leg, and an outside wall in contact with said lower-leg from the outside and an inside wall in contact with said lower-leg from the inside, which are erected on each side of said bottom wall (121a,122a) along said lower-leg to be messaged, to constitute said convex part,
said rotational axis (138,238,338,438) is positioned in the vicinity of a ridge constructed of the rear surface of said bottom wall (121a,122a) and the rear surface of said outside wall,
said inside wall is formed lower than that of said outside wall, and
said second surface is formed on the outside of said outside wall.

6. The chair-type massaging machine (100,200,300,400) according to claim 3, wherein,
said concave part (121,122,221,222,321,322,421,422) is formed of a bottom wall (121a,122a) for supporting a lower-leg, and an outer sidewall (124,224,324,424) in contact with said lower-leg from the outside and an inner sidewall (124,224,324,424) in contact with said lower-leg from the inside, which are erected on each side of said bottom wall (121a,122a) along said lower-leg to be messaged, to constitute said convex part, and
said rotational axis (138,238,338,438) is positioned in the vicinity of a ridge constructed of the rear surface of said bottom wall (121a,122a) and the rear surface of said inner sidewall (124,224,324,424).

7. The chair-type massaging machine (100,200,300,400) according to claim 6, wherein
said outside wall is formed lower than said inside wall, and
said second surface is formed on the outside of said inside wall.
